# EUROPEAN PATENT APPLICATION

(11) **EP 2 782 009 A1**
(43) Date of publication of application: **24.09.2014**
(21) Application number: 14155921.1
(22) Date of filing: 20.02.2014
(51) Int. Cl.: G06F 9/48

(54) **Apparatus, method, and program of detecting migration completion of virtual machine**

(30) Priority: 19.03.2013 JP 2013056675
(71) Applicant: FUJITSU LIMITED, Kawasaki-shi, Kanagawa 211-8588 (JP)
(72) Inventor: Shimokuni, Osamu, Kanagawa, 211-8588 (JP); Suzuki, Kazuhiro, Kanagawa, 211-8588 (JP)
(74) Representative: HOFFMANN EITLE

(57) **Abstract**

A computer detects, by a physical machine (10B) serving as a migration destination of a virtual machine (11A) of a migration target, a signal transmitted from the virtual machine (11A) of the migration target in response to a migration completion of the virtual machine (11A) of the migration target to the physical machine (10B) according to a setting by a management machine (10C); and notifies the management machine (10C) of the migration completion of the virtual machine (11A) of the migration target in response to the detection.

## Description

### FIELD

The embodiments discussed herein are directed to an apparatus, a method, and a program of detecting a migration completion of a virtual machine.

### BACKGROUND

In infrastructure as a Service (IaaS) systems, there are cases in which live migration (which may be hereinafter referred to as "LM") of moving an operating virtual machine (VM) from a certain physical machine to another physical machine for maintenance or arrangement optimization of network components.

For example, the LM is performed as IaaS management software (for example, OpenStack (a registered trademark)) gives an execution instruction to a virtualization platform (for example, Xen (a registered trademark) or VMware (a registered trademark)) of a physical machine. After the LM is completed, a process of changing a setting related to a network or a storage network is performed (post-processing).

As a technique related to the LM, there are techniques disclosed in JP 2011-70549 A and JP 2010-114665 A.

In an LM process according to a related art, notification of a timing at which control is transferred to a virtual machine of a migration destination is not given from the virtualization platform to the IaaS management software at present. For this reason, for example, the IaaS management software checks for the completion using polling performed in units of several tens of seconds.

During this time lag, due to a security filtering setting, an unnecessary packet may be transmitted, or recovery of resources may be delayed. For example, when tenant separation of a network is implemented using a tunnel technique, there are cases in which it is difficult for both a migration source and a migration destination to secure network accessibility at the same time in order to avoid a packet loop depending on a configuration method, and a communication failure period of time occurs during the time lag.

### SUMMARY

In an aspect, the present invention is directed to provide a technique capable of rapidly detecting a migration completion of a virtual machine.

According to an aspect, a physical machine serving as a migration destination of a migration target virtual machine detects a signal transmitted from the migration target virtual machine in response to a migration completion of the migration target virtual machine to the physical machine according to a setting by a management machine, and notifies the migration completion of the management machine in response to the detection.

According to the aspect described above, it is possible to rapidly detect a migration completion of a virtual machine.

### BRIEF DESCRIPTION OF DRAWINGS

FIG. 1 is a block diagram illustrating an exemplary configuration of an IaaS system which is an example of a computer system according to an embodiment;
FIG. 2 is a diagram for describing an LM completion detection operation in the IaaS system illustrated in FIG. 1;
FIG. 3 is a diagram for describing an LM completion detection operation in the IaaS system illustrated in FIG. 1;
FIG. 4 is a diagram for describing an LM completion detection operation in the IaaS system illustrated in FIG. 1;
FIG. 5 is a diagram for describing an LM completion detection operation in the IaaS system illustrated in FIG. 1;
FIG. 6 is a flowchart for describing an LM detector activation process in the IaaS system illustrated in FIG. 1;
FIG. 7 is a flowchart for describing an LM detector process in the IaaS system illustrated in FIG. 1;
FIG. 8 is a flowchart for describing an LM detection receiver process in the IaaS system illustrated in FIG. 1;
FIG. 9 is a sequence diagram for describing an LM completion detection operation in the IaaS system illustrated in FIG. 1;
FIG. 10 is a diagram illustrating an exemplary format of a notification signal (detection signal) illustrated in FIG. 4;
FIG. 11 is a diagram illustrating examples of record entries of a processing database (DB) illustrated in FIGS. 1 to 5 and FIG. 8;
FIG. 12 is a diagram for describing a security problem; and
FIG. 13 is a sequence diagram illustrating a comparative example for a comparison with FIG. 9.

### DESCRIPTION OF EMBODIMENTS

Hereinafter, an exemplary embodiment of the present invention will be described with reference to the appended drawings. The following description is merely an example and not intended to exclude various modifications or technical applications which will be described below. In the drawings used in the following embodiment, components denoted by the same reference numerals are the same or similar components unless otherwise set forth herein.

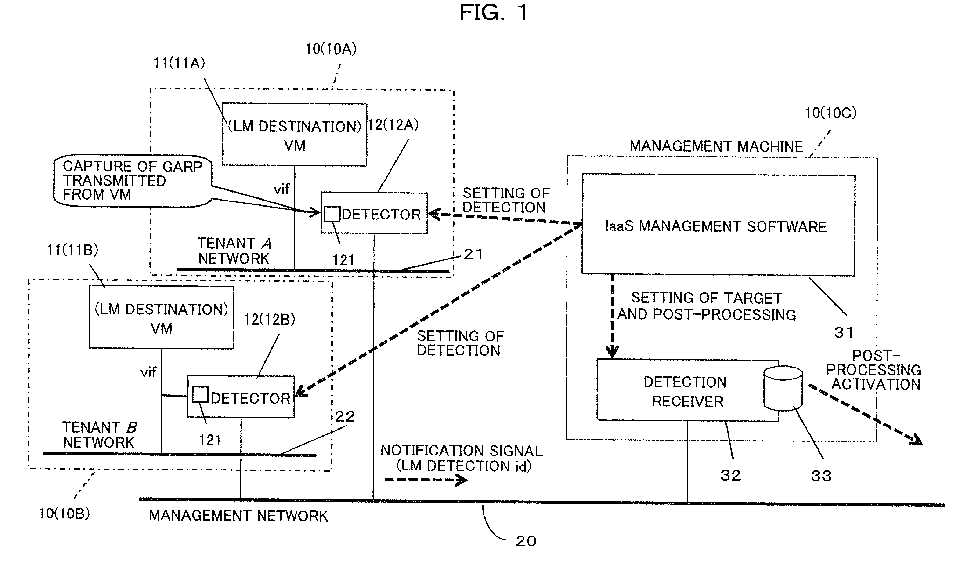

FIG. 1 is a block diagram illustrating an exemplary configuration of an IaaS system which is an example of a computer system according to an embodiment.

The IaaS system illustrated in FIG. 1 includes a plurality of physical machines (computers, servers, or the like) 10, for example. The physical machines 10 are connected to the management network 20 and are able to communicate with one another. The management network 20 is an Ethernet (a registered trademark) network as a non-limited example. FIG. 1 illustrates three physical machines 10A to 10C, but two or four or more physical machines may be provided.

Each of the physical machines 10 includes a central processing unit (CPU), a memory, and a storage device such as a hard disk device although not illustrated in the drawings. As the CPU reads a predetermined program from the memory or the storage device and executes the read program, a necessary functional unit is implemented. Examples of a program includes a program for implementing a virtual machine or a virtualization platform and a program (a program of detecting a migration completion of a virtual machine) for implementing a managing unit, a detector (process), a detection receiver, and the like which will be described later.

In the physical machine 10A, a virtual machine (VM) 11A operating in the physical machine 10A is connected to a tenant A network 21 through a virtual interface (vif). The VM 11A is capable of managing a device such as a computer connected to the tenant A network 21.

Similarly, in the physical machine 10B, a VM 11B operating in the physical machine 10B is connected to a tenant B network 22 through a vif. The VM 11B is capable of managing a device such as a computer connected to the tenant B network 22.

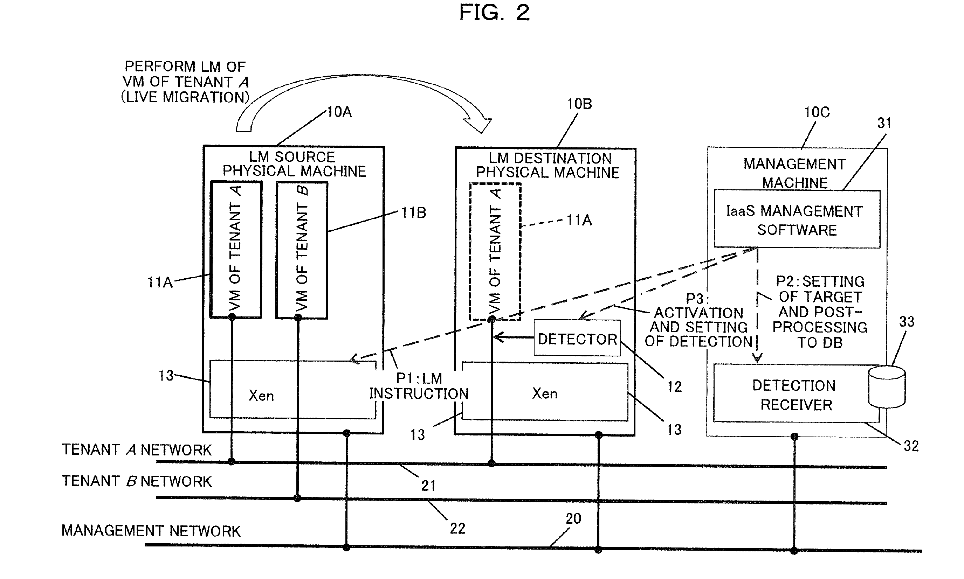

Further, there are cases in which a plurality of VMs 11 exist in a single physical machine 10, and the respective VMs 11 are connected to different tenant networks (for example, see a reference numeral 10A in FIG. 2). Tenant networks 21 and 22 are examples of networks (client networks) such as a local area network (LAN) used by clients.

The physical machine 10C is a management machine in which IaaS management software 31 operates as an example of a managing unit. For example, the management machine 10C can give an instruction to or configure a setting for the VMs 11 operating in the respective physical machines 10 through the management network 20. As an example of the instruction or the setting, an LM execution instruction may be given from an operating VM 11 to one of the physical machines 10A and 10B, or a setting and activation of a detector (process) 12 which will be described later may be performed.

The detectors 12A and 12B are exemplary execution processes defined by software, and are selectively and temporarily set to and activated in the physical machine 10 of the LM destination. In other words, the detector 12 is not constantly activated in all the physical machines 10, but selectively and temporarily set to and activated in the physical machine 10 of the LM destination among the plurality of physical machines 10.

The detector 12 performs monitoring (packet capturing) of the vif of the VM 11, and detects a gratuitous address resolution protocol (GARP) packet transmitted from the VM 11 through the vif. The detector 12 includes a transmission packet counter 121 corresponding to the vif of the monitoring target. The transmission packet counter 121 counts the number of packets transmitted to the tenant network 21 (22) through the vif.

The ARP packet is a packet used to translate an IP address to a MAC address, and is used to notify other devices within the same network of device migration, switching, or the like. Further, the ARP packet is used to update an ARP table of another device or change a route in an Ethernet switch in a virtual router redundancy protocol (VRRP) or a mobile IP. When the LM is completed, for example, in order to change a setting related to a network or a storage network, the VM 11 of the LM destination broadcasts the GARP packet to the corresponding tenant A network 21 or the tenant B network 22.

When the GARP packet is detected, the detector 12 determines that the LM has been completed. When the LM is determined as having been completed, the detector 12 generates a signal (which may be hereinafter referred to as a "notification signal" or a "detection signal") indicating a completion of the LM, and transmits the generated signal to the management machine 10C through the management network 20. The detector 12 is activated each time the VM 11 performs the LM, and after the LM is determined as having been completed, all operations that include the packet capturing operation are stopped. In other words, the execution process functioning as the detector 12 disappears.

The notification signal transmitted from the detector 12 to the management network 20 is received and detected by a detection receiver 32 of the physical machine 10C activated, for example, when the system of the management machine 10C is activated. The activation of the detection receiver 32 may be performed along with the setting and activation of the detector 12.

The detection receiver 32 is an example of an execution process defined by software, and activates and performs post-processing according to a setting made by the IaaS management software 31 when the notification signal is received and detected. As a non-limited example of the post-processing, there is a change of a setting related to a network or a storage network (for example, a change of a virtual tunnel network, migration of a security setting, or storage switching).

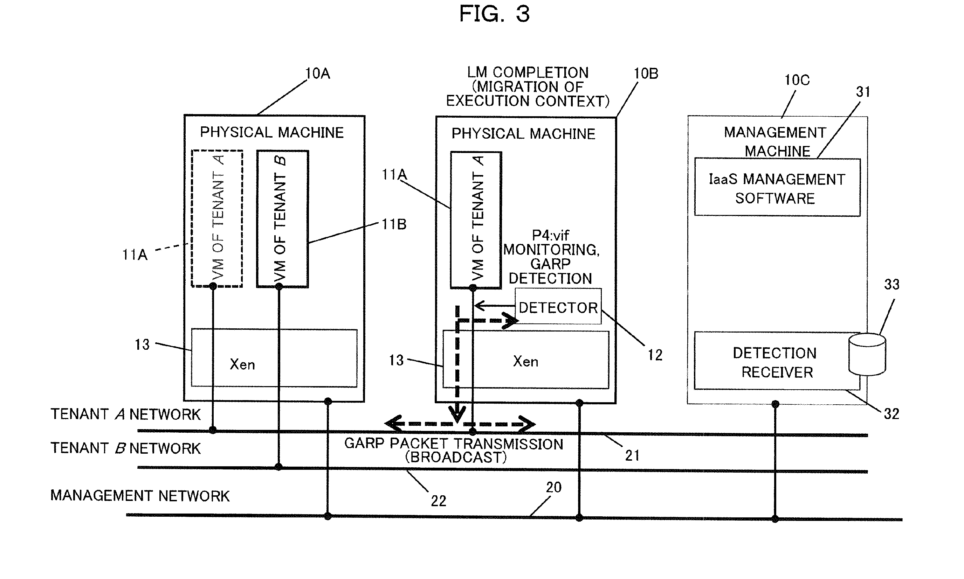

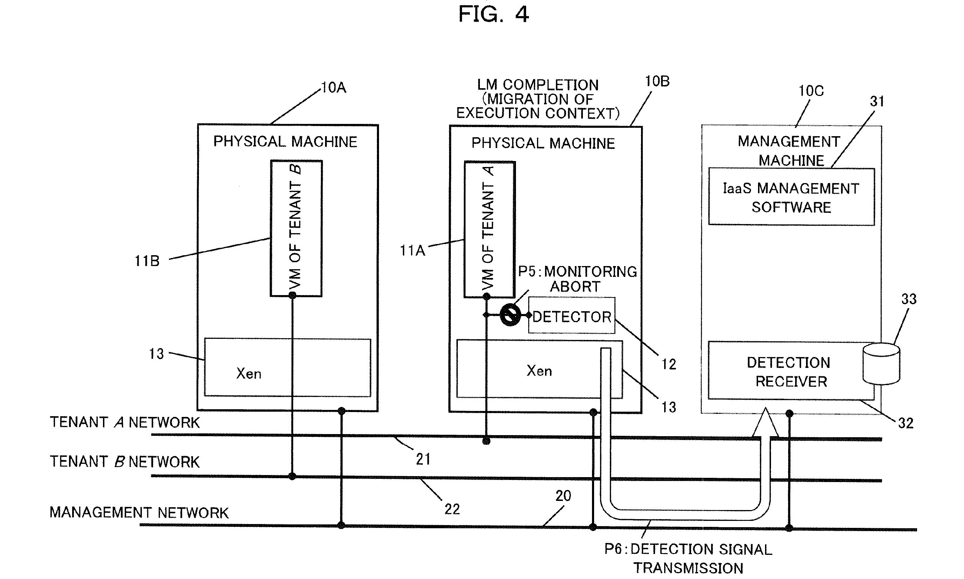

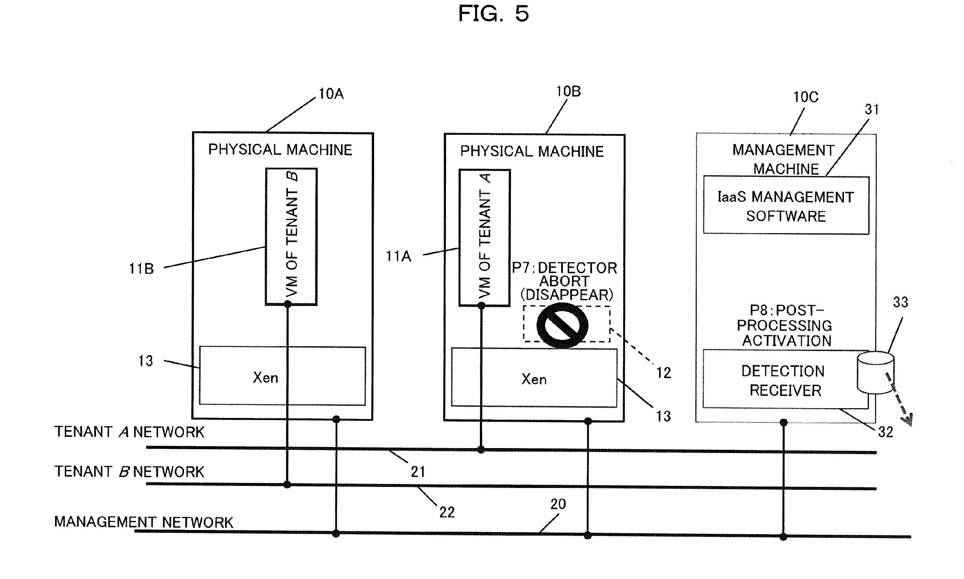

An exemplary operation according to the present embodiment will be described below with reference to FIGS. 2 to 5. FIGS. 2 to 5 illustrate an example in which, among VMs 11A and 11B operating in a physical machine (LM source physical machine) 10A, the VM 11A migrates to another physical machine (LM destination physical machine) 10B.
(Process P1) First of all, when the LM is performed, the IaaS management software 31 of the management machine 10C gives an LM instruction to the virtualization platform 13 (for example, Xen) of the LM source physical machine 10A as illustrated in FIG. 2.
(Process P2) Then, the IaaS management software 31 activates the detection receiver 32, and sets a universally unique identifier (UUID) of the VM 11A to be detected, a UUID of the LM destination physical machine 10B, and post-processing content (a pointer to post-processing) at the time of success and at the time of failure to the detection receiver 32.
(Process P3) Then, the IaaS management software 31 activates the detector 12B in the LM destination physical machine 10B, and sets the UUID of the VM 11A of the LM target and information of a vif to be monitored to the detector 12B.
(Process P4) Next, the detector 12B performs monitoring (packet capturing) of the vif of the LM target until the GARP packet is detected as illustrated in FIG. 3. When the GARP packet is detected, the detector 12B determines that the LM has been completed. At this time, it may be checked whether the transmission packet counter 121 (see FIG. 1) of the vif is one or more. Through this check, it can be reliably checked that the GARP packet has been transmitted from the LM destination VM 11B.
(Process P5) When the LM is determined as having been completed, the detector 12B stops monitoring of the vif as illustrated in FIG. 4.
(Process P6) The detector 12B generates a notification signal (or a detection signal) indicating a completion of the LM, and transmits the generated signal to the detection receiver 32 of the management machine 10C through the management network 20. At this time, the UUID of the migrated VM 11B may be included in the signal. In this case, migration of a plurality of VMs 11 can be performed in parallel.
(Process P7) When the detector 12B successfully performs communication with the detection receiver 32, the execution process functioning as the detector 12B disappears as illustrated in FIG. 5.
(Process P8) Meanwhile, upon receiving the notification signal transmitted from the detector 12B, for example, the detection receiver 32 activates post-processing corresponding to the UUID included in the received notification signal.

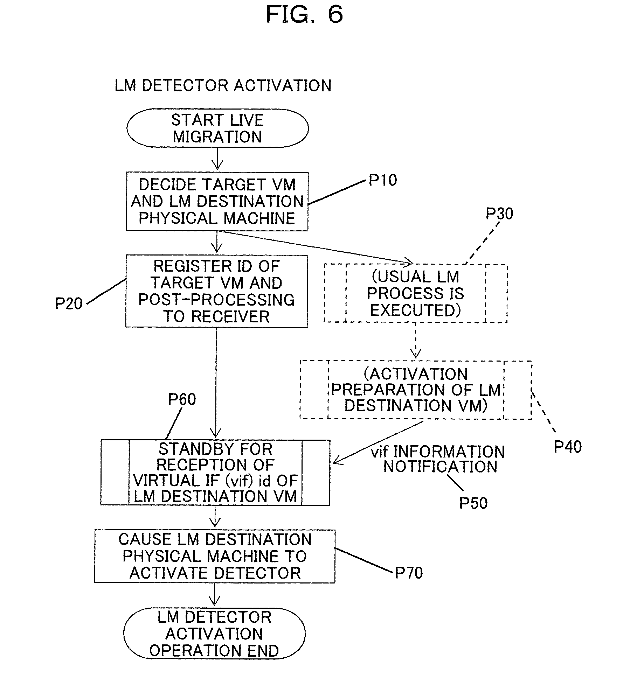

Next, the activation process (the LM detector activation process) of the detector 12, the process (LM detector process) of the detector 12, the process (LM detection receiver process) of the detection receiver 32 in the above-described exemplary operation will be described with reference to FIGS. 6, 7 and 8, respectively.

### (LM detector activation process)

As illustrated in FIG. 6, when the LM starts, the IaaS management software 31 decides the VM 11 of the LM target and the LM destination physical machine 10 of the corresponding VM (process P10). Then, the IaaS management software 31 gives an LM instruction to the virtualization platform 13 of the LM source physical machine 10 in which the VM 11 of the LM target operates.

Further, the IaaS management software 31 activates the detection receiver 32, and sets and registers the UUID of the virtual machine 11 to be detected, the UUID of the LM destination physical machine 10, and post-processing content (a pointer to post-processing) at the time of success and at the time of failure to the detection receiver 32 (process P20).

Meanwhile, the virtualization platform 13 of the LM source physical machine 10 that has received the LM instruction performs an LM preparation process with the LM destination physical machine 10. Examples of the preparation process include preparation start notification from the LM source physical machine 10 to the LM destination physical machine 10, storage attachment in the LM destination physical machine 10, and creation of the virtual interface vif (processes P30 and P40). When the preparation process is completed and activation of the migration destination VM 11 is prepared, identification information (ID) of the vif created by the LM destination physical machine 10 is transmitted to the IaaS management software 31 through the management network 20 (process P50).

After process P20, the IaaS management software 31 enters a standby state for reception of the identification information of the vif from the LM destination physical machine 10 (process P60). When the identification information of the vif is received, the IaaS management software 31 activates the detector 12 of the LM destination physical machine 10 in which the vif identified by the corresponding identification information exists (process P70).

### (LM detector process)

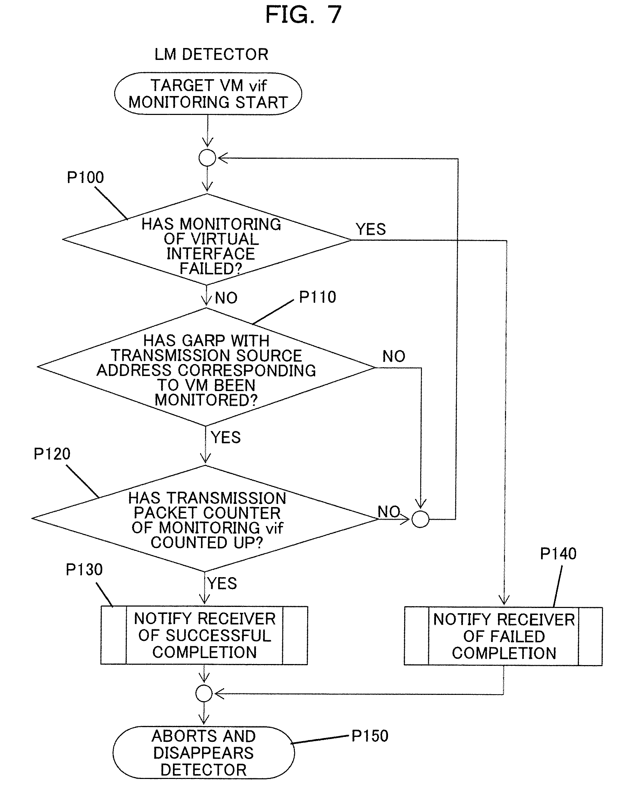

When the detector 12 is activated, the detector 12 monitors whether monitoring of the vif has failed as illustrated in FIG. 7 (process P100). When monitoring of the vif has not failed (no in process P100), monitoring of the vif is continuously performed (a no route in process P110) until the GARP packet having a transmission source address of the VM 11 is detected (until yes is determined in process P110).

When the GARP packet having the transmission source address of the VM 11 is detected, the detector 12 checks whether the transmission packet counter 121 of the vif of the monitoring target has counted up to a value of one or more (process P120 from a yes route in process P110).

When it is checked that the transmission packet counter 121 of the vif of the monitoring target has not counted up to a value of one or more, the detector 12 returns to process P100 and continuously performs monitoring (a no route in process P120). Here, the checking process of the transmission packet counter 121 may be unperformed.

Meanwhile, the transmission packet counter 121 of the vif of the monitoring target has counted up to a value of one or more, the detector 12 generates a notification signal to be directed to the detection receiver 32, and transmits the notification signal to the detection receiver 32 through the management network 20 (process P130 from a yes route in process P120). When the notification signal is transmitted, the detector 12 stops its operation and then disappears (process P150). The detector 12 may stop its operation and then disappear when a completion notification signal is received from the IaaS management software 31.

Further, when monitoring of the vif has failed in process P100, for example, the detector 12 may notify the detection receiver 32 of a monitoring failure (an error) before stopping its operation and disappears (process P140 from a yes route in process P100).

When the LM is failed, since the GARP packet is not transmitted, the detector 12 remains unless the error process is performed. When the detector 12 remains, a memory and a process table of the physical machine 10 may be exhausted.

In this regard, the detector 12 notifies the detection receiver 32 of an LM failure when an error (a read error) occurs in monitoring performed by the detector 12 as a result of recovering the vif by the virtualization platform 13 due to the LM failure, then stops its operation, and disappears. As a result, exhaustion of the memory and the process table of the physical machine 10 can be prevented. Further, since the detector 12 disappears when an error occurs, an attack time to the detector 12 can be limited, and thus the security can be improved.

In the above example, the LM is determined as having been failed when monitoring of the vif fails, but the present embodiment is not limited to this example. For example, an appropriate completion time is set in advance, and when the GARP packet is not detected until the completion time elapses (time out), the LM may be determined as having been failed.

Further, after the IaaS management software 31 detects the LM failure, the detector 12 may stop in response to an external signal. For example, the IaaS management software 31 transmits a hang-up signal to the detector 12, and when the hang-up signal is received, the detector 12 starts a failure stop process and then disappears. The hang-up signal is an example of a signal which indicates the migration failure of the VM 11.

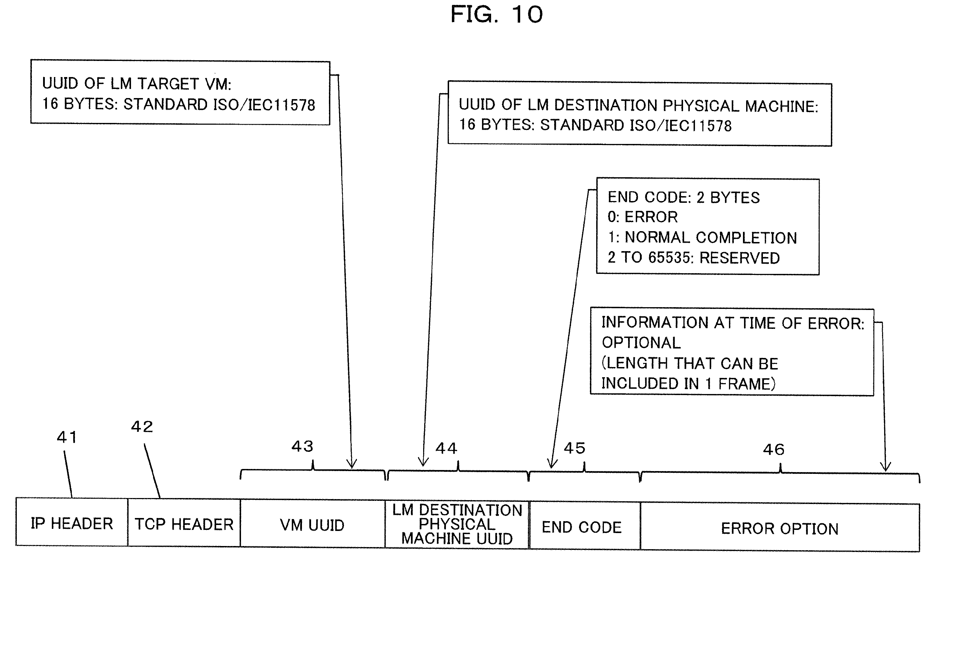

FIG. 10 illustrates an exemplary format of the above-described notification signal. The notification signal includes an IP header 41, a TCP header 42, a VM UUID field 43, an LM destination physical machine UUID field 44, an completion code field 45, and an error option field 46 as illustrated in FIG. 10.

The VM UUID field 43 is a 16-byte field which conforms to the ISO/IEC11578 standard as a non-limited example. The UUID of the VM of the LM target is set to the field 43.

The LM destination physical machine UUID field 44 is also a 16-byte field which conforms to the ISO/IEC11578 standard as a non-limited example. The UUID of the LM destination physical machine 10 is set to the field 44.

The end code field 45 is a 2-byte field as a non-limited example, and either of a value (for example, 0) indicating an error and a value (for example, 1) indicating a normal end is set to the field 45 as an example of an end code. Other values (2 to 65535) indicated by 2 bytes are reserved values.

The error option field 46 is an option field, and error information having a length which can be stored in a 1-frame sized portion of the notification signal is set to the field 46.

The detection receiver 32 can identify a monitoring normal/abnormal completion by the VM of the LM target, the LM destination physical machine 10, and the detector 12, information when an abnormal completion occurs, and the like based on the information set to the respective fields 43 to 46.

### (LM detection receiver process)

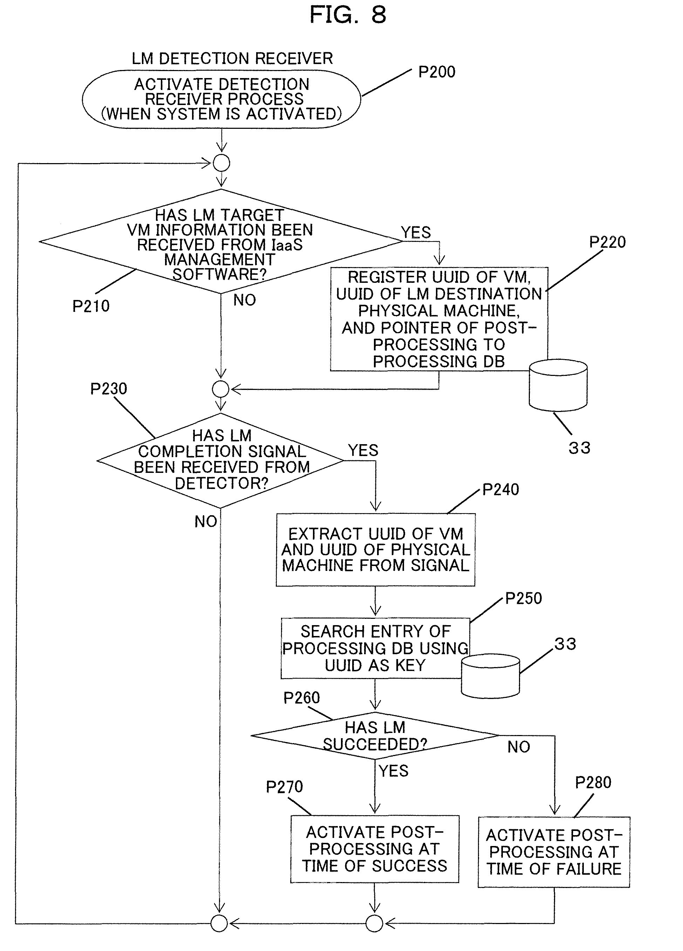

When the detection receiver 32 is activated as the system of the management machine 10C is activated as illustrated in FIG. 8 (process P200), the detection receiver 32 monitors whether information of the VM 11 of the LM target has been received from the IaaS management software 31 (process P210).

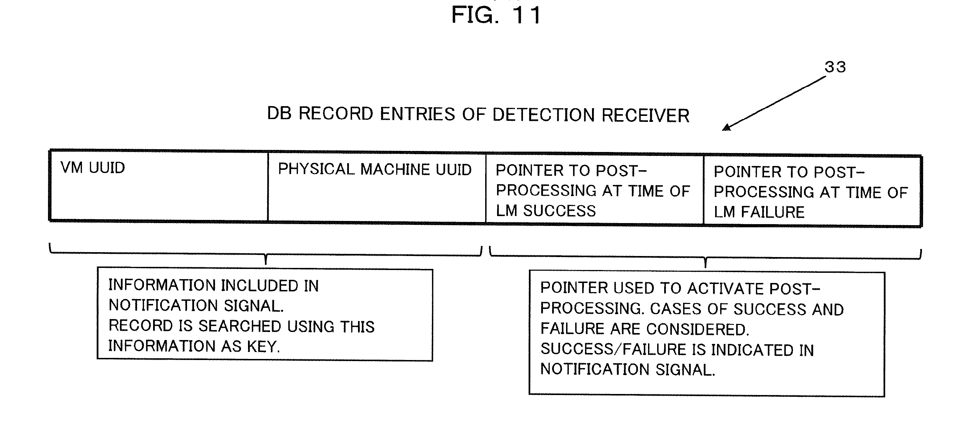

When information of the VM 11 of the LM target is received from the IaaS management software 31 during the monitor (yes in process P210), the detection receiver 32 registers the UUID of the VM, the UUID of the LM destination physical machine 10, and the pointer of the post-processing to a processing database (DB) 33 based on the received information as illustrated in FIG. 11 (process P220).

After the information is registered to the processing DB 33 or when information of the VM 11 of the LM target is not received from the IaaS management software 31 (no in process P210), the detection receiver 32 monitors whether the notification signal indicating the LM completion has been received from the detector 12 (process P230).

When the notification signal has not been received, the detection receiver 32 returns to process P210 and then continuously performs monitoring (a no route in process P230). Meanwhile, when the notification signal has been received (yes in process P230), the detection receiver 32 extracts the UUID of the VM 11 of the LM target and the UUID of the LM destination physical machine 10 which are included in the received signal (for example, see FIG. 10) (process P240).

Then, the detection receiver 32 searches the entry of the processing DB 33 using the extracted respective UUIDs as a key (process P250), and determines whether the LM has succeeded or failed based on information included, for example, in the end code field 45 of the received the notification signal (process P260).

When the LM has succeeded (yes in process P260), the detection receiver 32 activates the post-processing with reference to the pointer to the post-processing at the time of LM success in the processing DB 33 (see FIG. 11) (process P270).

However, when the LM has failed (no in process P260), the detection receiver 32 activates the post-processing with reference to the pointer to the post-processing at the time of LM failure in the processing DB (see FIG. 11) (process P280).

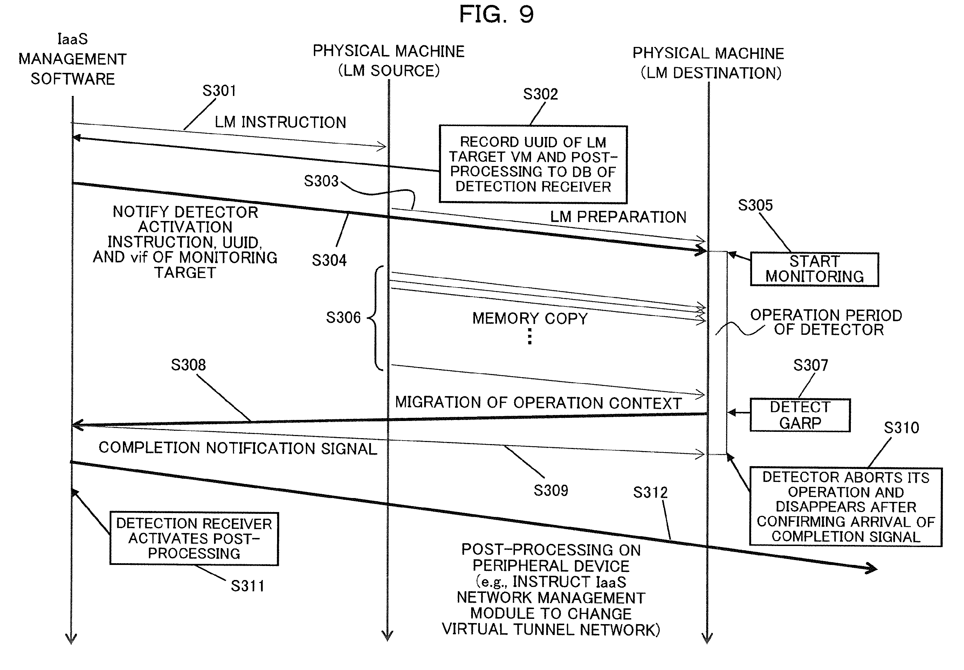

Next, an exemplary sequence based on the above-described processes will be described with reference to FIG. 9.

First of all, the IaaS management software 31 transmits the LM instruction to the virtualization platform 13 of the LM source physical machine 10 (S301). Further, the detection receiver 32 registers the UUID of the VM, the UUID of the LM destination physical machine 10, and the pointer of the post-processing to the processing DB 33 (see FIG. 11) based on information received from the IaaS management software 31 (S302).

The virtualization platform 13 of the LM source physical machine 10 performs the above-described LM preparation process (for example, storage attachment in the LM destination physical machine 10 and creation of the virtual interface vif) with the LM destination physical machine 10 (S303).

Meanwhile, when the information registration to the processing DB 33 is finished, the IaaS management software 31 transmits an activation instruction of the detector 12, the UUID of the VM 11A of the LM target, and information of the vif of the monitoring target to the LM destination physical machine 10 (S304).

The LM destination physical machine 10 activates the detector 12, and performs monitoring (packet capturing) of the vif of the LM target until the GARP packet is detected (S305). During this operation, the LM process such as a memory copy is performed between the LM source physical machine 10 and the LM destination physical machine 10 (S306).

Thereafter, when the detector 12 detects transmission of the GARP packet (S307), the detector 12 generates the notification signal (see FIG. 10) and transmits the notification signal to the detection receiver 32, and thus operation context shifts to the IaaS management software 31 (S308).

When the operation context shifts, the IaaS management software 31 transmits the completion notification signal to the detector 12 of the LM destination physical machine 10 (S309). When the completion notification signal is received, the detector 12 stops its operation and then disappears (S310).

Meanwhile, the detection receiver 32 that has received the notification signal from the detector 12 searches the processing DB 33 based on information included in the notification signal, and activates and performs the corresponding post-processing (S311 and S312).

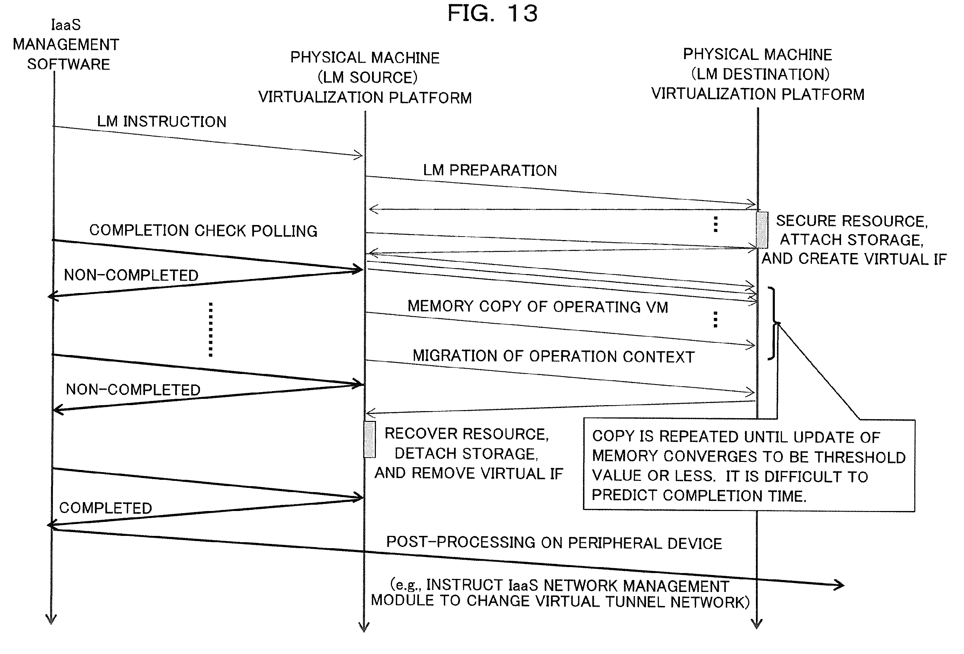

According to the above-described embodiment, the IaaS management software 31 can identify a timing at which control is switched to the LM destination VM based on the notification signal from the detector 12. Thus, for example, it is unnecessary to check for the LM completion using polling performed in units of several tens of seconds as exemplified in a comparative example of FIG. 13 for a comparison with FIG. 9.

Thus, the LM completion can be rapidly detected, and a situation in which an unnecessary time lag occurs, and due to a security filtering setting, an unnecessary packet is transmitted or recovery of resources is delayed can be avoided. As a result, the occurrence of a communication failure period of time during the time lag can be prevented.

Further, according to the above-described embodiment, the following effects and advantages can be obtained.

Measures against attack from malicious client

Since the detector 12 temporarily exists during a period of time in which the LM is performed, an attackable period of time is limited.

Since the detector 12 is selectively set to the physical machine 10 of the LM destination, it is difficult for an attacking side to specify a point of an attack target.

The detector 12 is connected only with a tenant network of a client which is performing the LM and the management network 20, but is not connected with a tenant network of a client which is not performing the LM. Thus, even when the detector 12 is attacked and the security is broken, influence thereof is limited to the tenant network sharing the physical machine 10 in which the security is broken.

Since the detector 12 can filter a packet other than the ARP packet transmitted from the VM 11 of the LM destination, an attack packet transmitted from another VM 11 can be easily excluded.

Since the notification signal generated by the detector 12 is transmitted to the detection receiver 32, even when the GARP packet is doctored by the attacking side, the doctored GARP packet does not reach the IaaS management software 31. Further, since information of an IP address or a MAC address used in the client network 21 or 22 is not transmitted to the management network 20, unnecessary information leakage or the like can be prevented, and thus, the security can be improved.

### Measures against operator's erroneous operation and malicious operation

Since the management machine 10C usually operated by an operator is not connected to the tenant network 21 or 22 but separated from the tenant networks 21 and 22, the security of the tenant can be secured. In other words, the GARP packet is outputted to the tenant network 21 or 22, and not observed from a cloud operating side.

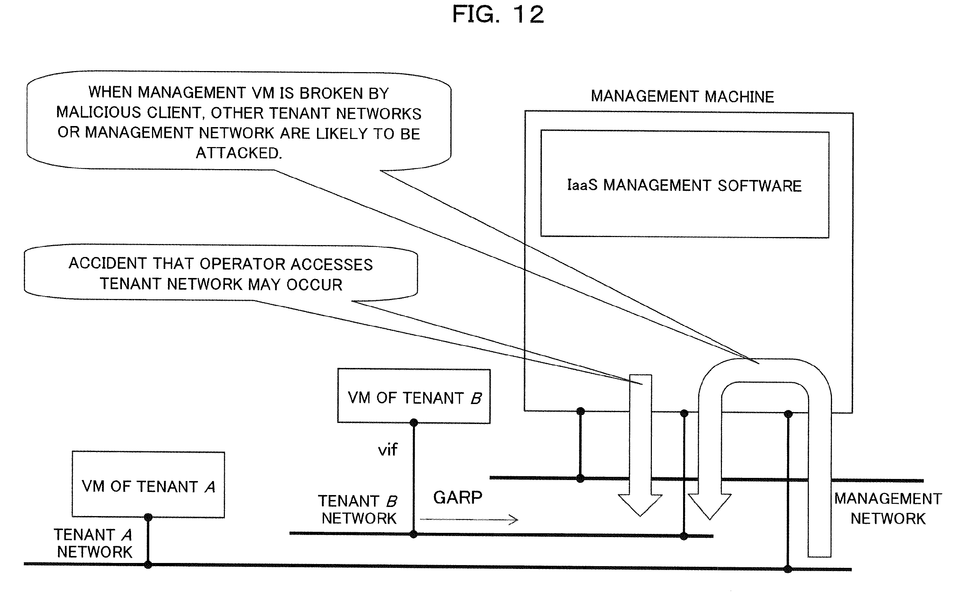

If the physical machine 10C operating the IaaS management software 31 is connected to the tenant networks 21 and 22 and is allowed to observe the GARP packet transmitted to the tenant network 21 or 22 as illustrated in FIG. 12, the following security problem may occur.

When the management machine 10C is attacked by a malicious client and the security is broken, another tenant network or the management network 20 may be attacked easily. Further, an accident that the operator accesses the tenant network 21 or 22 may occur.

For example, since the personnel of the operating side frequently log in the physical machine 10C operating the IaaS management software 31, staff training or management of evidence for an accident or the like are necessary (a comparative target: OS of physical machine).

Further, since a plurality of client networks are connected to a general OS (for example, Linux (a registered trademark)), it is highly vulnerable to a failure or an attack. In addition, the LM completion may erroneously be detected by transmission (the GARP packet is transmitted even through up/down of an interface) of the GARP packet caused by other factors than the LM completion.

On the other hand, in the above-described embodiment, the IaaS management software 31 does not directly detect the GARP packet, and the detector 12 corresponding to the VM 11 of the LM target is temporarily installed in the LM destination physical machine 10, and the detector 12 is connected only with a single tenant network. In other words, since the detector 12 is installed at a high-security position in view of a time and a place and the GARP packet is detected by the detector 12, the above security problem can be solved.

Further, the above-described embodiment can be applied independently of a hypervisor or a virtualization platform. In other words, it is unnecessary to improve a hypervisor or the like, and an entity other than a manufacturer of a hypervisor or the like need not follow a version upgrade or a security patch. Further, the above-described embodiment can be applied to a plurality of kinds of hypervisors or the like.

Furthermore, since the LM completion is notified to the IaaS management software 31, post-processing of an apparatus other than a network such as a storage or a machine or post-processing of an upper layer can be performed. Even in a setting of a network device, a setting to a device not connected to the same Ethernet can be changed.

In the above-described embodiment, the GARP packet is used as an example of a signal of a detection target detected by the detector 12, but the embodiment is not limited to this example. A signal serving as a signal which indicates a migration completion of the VM 11 may be used as a detection target detected by the detector 12.

According to the above-described technology, it is possible to rapidly detect a migration completion of a virtual machine.

All examples and conditional language provided herein are intended for pedagogical purposes to aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiment (s) of the present invention have been described in detail, it should be understood that the various changes, substitutions, and alterations could be made hereto without departing from the spirit and scope of the invention.

## Claims

1. An apparatus of detecting a migration completion of a virtual machine, comprising:
a unit (12) configured to detect, by a physical machine (10B) serving as a migration destination of a virtual machine (11A) of a migration target, a signal transmitted from the virtual machine (11A) of the migration target in response to a migration completion of the virtual machine (11A) of the migration target to the physical machine (10B) according to a setting by a management machine (10C); and
a unit (12) configured to notify the management machine (10C) of the migration completion of the virtual machine (11A) of the migration target in response to the detection.

2. The apparatus according to claim 1,
wherein a detector process of performing the detection disappears after notification representing the migration completion is transmitted to a detection receiver (32) of the management machine (10C).

3. The apparatus according to claim 2,
wherein the detector process counts the number of signals transmitted from the virtual machine to a client network (21, 22), and generates the notification when the counted number is one or more.

4. The apparatus according to claim 2 or 3,
wherein the detector process disappears upon failing the detection of the signal.

5. The apparatus according to claim 2 or 3,
wherein the detector process disappears upon failing the detection of the signal within a predetermined period of time.

6. The apparatus according to claim 2 or 3,
wherein the detector process disappears upon receiving a signal representing a migration failure of the virtual machine (11A) from the management machine (10C).

7. The apparatus according to any one of claims 2 to 6,
wherein the detection receiver (32) executes predetermined post-processing upon receiving the notification.

8. The apparatus according to any one of claims 2 to 7,
wherein the notification representing the migration completion is a gratuitous address resolution protocol (GARP) packet.

9. A method of detecting a migration completion of a virtual machine, comprising:
detecting, by a physical machine (10B) serving as a migration destination of a virtual machine (11A) of a migration target, a signal transmitted from the virtual machine (11A) of the migration target in response to a migration completion of the virtual machine (11A) of the migration target to the physical machine (10B) according to a setting by a management machine (10C); and
notifying the management machine (10C) of the migration completion of the virtual machine (11A) of the migration target in response to the detection.

10. A program that causes a computer to execute a process of detecting a migration completion of a virtual machine, the process comprising:
detecting, by a physical machine (10B) serving as a migration destination of a virtual machine (11A) of a migration target, a signal transmitted from the virtual machine (11A) of the migration target in response to a migration completion of the virtual machine (11A) of the migration target to the physical machine (10B) according to a setting by a management machine (10C); and
notifying the management machine (10C) of the migration completion of the virtual machine (11A) of the migration target in response to the detection.
